# EUROPÄISCHE PATENTSCHRIFT

(11) **EP 2 687 349 B1**
(45) Veröffentlichungstag und Bekanntmachung des Hinweises auf die Patenterteilung: **05.07.2017**
(21) Anmeldenummer: 13175878.1
(22) Anmeldetag: 10.07.2013
(51) Int. Cl.: B29C 45/00, B29K 101/12, B29K 307/04, B29B 17/00, B29B 17/04, B29K 105/04, B29K 105/06

(54) **Verfahren zur Herstellung von Leichtbauelementen aus kohlenstofffaserverstärktem, thermoplastischem Kunststoff**
Method for manufacturing lightweight components from carbon-fibre reinforced thermoplastics
Procédé de fabrication de composants légers en matière synthétique thermoplastique renforcée avec des fibres de carbone

(30) Priorität: 18.07.2012 DE 102012212610
(43) Veröffentlichungstag der Anmeldung: 22.01.2014
(73) Patentinhaber: Bayerische Motoren Werke Aktiengesellschaft, 80809 München (DE)
(72) Erfinder: Schwaighofer, Armin, 80809 Muenchen (DE); Stein, Sven, 84028 Landshut (DE)

(56) Entgegenhaltungen:
- EP-A1- 1 790 454
- EP-A1- 2 410 036
- DE-C1- 19 514 543
- DAY R J ET AL: "Recycling of APC-2 offcuts", COMPOSITES MANUFACTURING, BUTTERWORTH SCIENTIFIC, GUILDFORD, SURREY, GB, Bd. 5, Nr. 3, 30. September 1994 (1994-09-30), Seiten 187-193, XP023627289, ISSN: 0956-7143, DOI: 10.1016/0956-7143(94)90028-0 [gefunden am 1994-09-01]

## Beschreibung

Die Erfindung bezieht sich auf ein Verfahren zur Herstellung von Leichtbauelementen aus kohlenstofffaserverstärktem, thermoplastischem Kunststoff durch Spritzgießen.

Ein solches Verfahren zur Herstellung von Karosseriebauteilen ist beispielsweise aus EP 1 790 454 A1 bekannt. Dabei werden lange Fasern verwendet, die durch Zerkleinern auf eine Länge von 1,5 bis 10 mm gebracht werden. Lange Kunststofffasern sind jedoch mit hohen Produktionskosten verbunden.

Ferner ist es bekannt, die Restteile, die beim Zuschneiden von mit Kohlenstofffasern verstärkten Prepregs anfallen, in einen Extruder zu einem kurzfaserverstärkten Material zum Spritzgießen aufzuarbeiten (DAY R J ET AL: "Recycling of APC-2 offcuts", COMPOSITES MANUFACTURING, BUTTERWORTH SCIENTIFIC, GUILDFORD, SURREY, GB, Bd. 5, Nr. 3, 30. September 1994 (1994-09-30), Seiten 187-193). Die Druckschriften DE 195 14 543 C1 und EP 2 410 036 A1 offenbaren weitere Verfahren zur Weiterverwendung Kunstharz- und Kohlenstofffasern-enthaltender Abfälle.

Leichtbauelemente, insbesondere für den Fahrzeuginnenraum, wie Instrumententafel, werden derzeit durch Spritzgießen von thermoplastischem Kunststoff, wie Polypropylen, hergestellt, welcher zur Verbesserung der Steifigkeit mit Glasfasern verstärkt ist. Dieses Verfahren ist kosteneffizient, etabliert und wird weitläufig eingesetzt.

Zwar weisen Bauelemente aus kohlenstofffaserverstärkten Kunststoffen gegenüber Bauelementen aus glasfaserverstärkten Kunststoffen eine höhere gewichtsspezifische Festigkeit und Steifigkeit auf, so dass kohlenstofffaserverstärkte Leichtbauelemente bei gleichbleibender Stabilität dünner und damit leichter ausgelegt werden können als Bauelemente aus glasfaserverstärktem Kunststoff, jedoch sind Bauelemente aus kohlenstofffaserverstärkten Kunststoffen mit wesentlich höheren Kosten verbunden.

Aufgabe der Erfindung ist es, ein kostengünstiges Verfahren zur Herstellung kohlenfaserverstärkter Leichtbauelemente durch Spritzguss zur Verfügung zu stellen.

Dies wird erfindungsgemäß durch das im Anspruch 1 gekennzeichnete Verfahren erreicht. In den Unteransprüchen sind vorteilhafte Ausgestaltungen der Erfindung wiedergegeben. Nach der Erfindung werden die Kohlenstofffasern, die zur Herstellung der kohlenstofffaserverstärkten, thermoplastischen Kunststoff-Leichtbauelemente verwendet werden, aus Restteilen gewonnen, die beim Zuschneiden von Kohlenstofffaser-Halbzeug anfallen, welches zu kohlenstofffaserverstärkten, durolastischen Bauteilen verarbeitet wird.

So fallen insbesondere bei der Herstellung von Karosseriebauteilen von Elektrofahrzeugen große Mengen an Restteilen von Kohlenstofffaser-Halbzeug an.

Karosseriebauteile von Elektrofahrzeugen, wie Boden- und Seitenstrukturen und Türrahmen, werden im Hinblick auf ein möglichst geringes Gewicht aus kohlenstofffaserverstärkten Duroplasten, insbesondere Polyester hergestellt.

Dazu wird ein bahnförmiges Halbzeug aus Kohlenstofffasern, beispielsweise ein Kohlenstofffasergewebe, das auf eine Rolle als Bahn aufgewickelt sein kann, von der Rolle zum Beispiel mit einer Förderanlage mit Greifer abgezogen, worauf mit einer Schneideinrichtung aus der abgezogenen Bahn diejenigen Halbzeug-Teile herausgeschnitten werden, aus denen Karosseriebauteile des Elektrofahrzeugs hergestellt werden.

Die Kohlenstofffaser-Halbzeug-Schnittteile werden dann mit einem duroplastischen Kunststoff, insbesondere Polyester, getränkt, worauf der duroplastische Kunststoff zum Beispiel durch Heißpresstechnik oder Autoklavtechnik unter erhöhter Temperatur zu dem jeweiligen Bauteil ausgehärtet wird.

Aus den Restteilen des Kohlenstofffaser-Halbzeugs, welche nach dem Zuschneiden des Kohlenstofffaser-Halbzeugs zurückbleiben und bisher unter laufenden Kosten entsorgt werden müssen, werden erfindungsgemäß die Leichtbauelemente aus kohlenstofffaserverstärktem, thermoplastischem Kunststoff durch Spritzgießen hergestellt.

Diese Restteile aus Kohlenstofffaser-Halbzeug umfassen insbesondere die Bereiche zwischen den Schnittteilen und die Randabschnitte der Kohlenstofffaser-Halbzeug-Bahn, an denen die Greifer der Förderanlage angreifen.

Die Restteile aus dem Kohlenstofffaser-Halbzeug werden vorzugsweise zu Langfasern aufgearbeitet, also zu Kohlenstofffasern, die eine durchschnittliche Länge von weniger als 50 Millimeter aufweisen. Vorzugsweise beträgt die durchschnittliche Länge der aufgearbeiteten Kohlenstofffasern jedoch mindestens 1 Millimeter, insbesondere 5 bis 30 Millimeter, wobei mit abnehmender Faserlänge die Festigkeit der Leichtbauelemente abnimmt.

Kohlenstoff-Langfasern bis zu 50 Millimeter können mit dem Extruder einer Thermoplast-Spritzgießmaschine, wie sie vorzugsweise nach dem erfindungsgemäßen Verfahren zum Spritzgießen verwendet wird, in dem Thermoplast homogen und im Wesentlichen ohne Zerbrechen durch die Schnecke des Extruders eingearbeitet werden.

Um die Halbzeug-Restteile aus Kohlenstofffasern zu Kohlenstoff-Langfasern aufzuarbeiten, können die Kohlenstofffasern der Restteile zum Beispiel mit einer Schneideinrichtung oder Schlageinrichtung auf Langfaser-Länge reduziert werden.

Der Anteil der Kohlenstofffasern in dem Thermoplast kann bis zu 50 Volumenprozent betragen. Vorzugsweise beträgt er mehr als 10 Volumenprozent.

Wenn in dem Hohlraum des Spritzwerkzeugs der Spritzgießmaschine nach beim Einspritzen des kohlenstofffaserverstärkten thermoplastischen Kunststoffs ein Überdruck anliegt, kann zudem ein schaumartiges Leichtbauelement mit Lufteinschlüssen erhalten werden , dessen Dichte zusätzlich mit einem Prägehub und oder Aufschäumen nochmals reduziert werden kann.

Das Kohlenstofffaser-Halbzeug kann ein Kohlenstofffaser-Gewebe, -Gelege, - Geflecht, -Vlies oder -Matte sein.

Vorzugsweise besteht es aus mehr als zwei, beispielsweise drei bis zehn Kohlenstofffaser-Lagen. Die Lagen können dabei zu einer Matte verwebt sein.

Der thermoplastische Kunststoff kann ein Polyolefin, insbesondere Polypropylen sein, aber auch Polyamid (PA), Polycarbonat (PC), ein Acrylnitril-Butadien-Styrol-Polymeres (ABS) oder Blend aus einem oder mehreren dieser Thermoplasten sein.

Wenn die Kohlenstofffasern der Halbzeug-Restteile eine auf Duroplasten, beispielsweise Polyester, abgestimmte Schlichte aufweisen, welche die Haftung der Kohlenstofffasern an dem thermoplastischem Kunststoff herabsetzt, wird ein auf den Themoplast abgestimmter Haftvermittler vor oder während des Spritzgußprozesses zugegeben.

Auch kann auf die Kohlenstofffasern vor dem Spritzgießen ein Haftvermittler aufgetragen werden, um die Haftung der Kohlenstofffasern an dem thermoplastischen Kunststoff der Matrix zu erhöhen.

Das erfindungsgemäße Verfahren ist insbesondere zur Herstellung von Fahrzeugbauelementen geeignet, vor allem für Bauelemente im Fahrzeuginnenraum, wie Instrumententafel, Mittelkonsole oder Türverkleidung, aber beispielsweise auch für Stoßfänger.

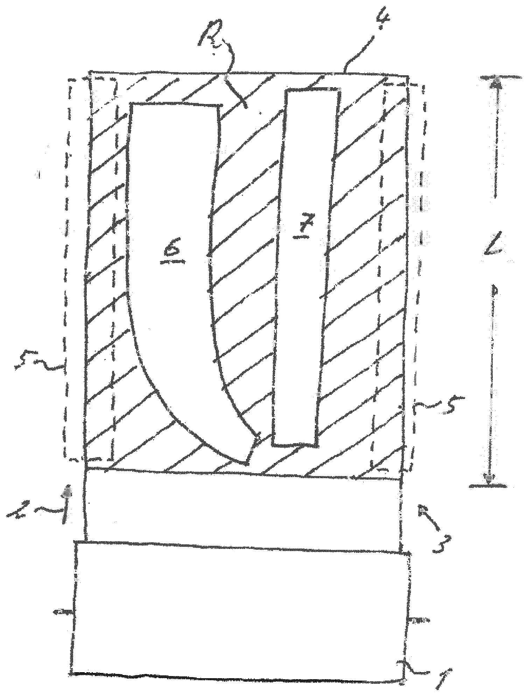

Nachstehend ist die Erfindung anhand der beigefügten Zeichnung beispielhaft näher erläutert, deren einzige Figur schematisch eine Draufsicht auf eine Kohlenstofffaser-Halbzeug-Bahn zeigt, aus der die Schnittteile herausgeschnitten sind, welche zu kohlenstofffaserverstärkten, duroplastischen Bauteilen verarbeitet werden.

Danach ist von einer Rolle 1 entsprechend dem Pfeil 2 eine Bahn aus einem Halbzeug 3 aus einer Kohlenstofffaser-Matte abgewickelt worden, deren Abschnitt 4 mit der Länge L beidseitig durch eine gestrichelt dargestellte Greifeinrichtung 5 gehalten wird.

Aus dem Abschnitt 4 des Kohlenstofffaserhalbzeugs 3 sind die Schnittteile 6, 7 mit einem nicht dargestellten Cutter herausgeschnitten worden, die zu Bauteilen aus kohlenstofffaserverstärktem, duroplastischem Kunststoff verarbeitet werden.

Aus dem schraffiert dargestellten Restteil R werden die Kohlenstoff-Langfasern gewonnen, aus denen Leichtbauteile aus kohlenstofffaserverstärktem, thermoplastischem Kunststoff durch Spritzgießen erhalten werden.

## Patentansprüche

1. Verfahren zur Herstellung von Leichtbauelementen aus kohlenstofffaserverstärktem, thermoplastischem Kunststoff durch Spritzgießen, wobei, die Kohlenstofffasern aus Restteilen (R) gewonnen werden, die beim Zuschneiden von Kohlenstofffaser-Halbzeug (3) zu Schnittteilen (6, 7) anfallen, welche zu kohlenstofffaserverstärkten, duroplastischen Bauteilen verarbeitet werden, **dadurch gekennzeichnet, dass** die Restteile (R) bei einem Verfahren anfallen, bei dem die zu kohlenstofffaserverstärkten, duroplastischen Bauteilen zu verarbeitenden Kohlenstofffaser-Halbzeug-Schnittteile (6, 7) erst nach dem Zuschneiden mit dem duroplastischem Kunststoff versetzt werden.

2. Verfahren nach Anspruch 1, **dadurch gekennzeichnet, dass** die Restteile (R) zu Kohlenstofffasern mit einer Länge von kleiner 50 Millimeter aufgearbeitet werden.

3. Verfahren nach Anspruch 1 oder 2, **dadurch gekennzeichnet, dass** der Anteil der Kohlenstoffaser in dem Leichtbauelement 5 bis 50 Gew.% beträgt.

4. Verfahren nach einem der vorstehenden Ansprüche, **dadurch gekennzeichnet, dass** die durch Spritzgießen hergestellten kohlenstofffaserverstärkten, thermoplastischen Leichtbauelemente Fahrzeug-Bauelemente sind.

5. Verfahren nach einem der vorstehenden Ansprüche, **dadurch gekennzeichnet, dass** der thermoplastische Kunststoff ein Polyolefin (Alternativ ein Polyamid/Acrylbutadienstyrol oder ABS/PC) ist.

6. Verfahren nach einem der vorstehenden Ansprüche, **dadurch gekennzeichnet, dass** das Kohlenstofffaser-Halbzeug (3) aus mehreren Kohlenstofffaser-Lagen besteht.

7. Verfahren nach einem der vorstehenden Ansprüche, **dadurch gekennzeichnet, dass** das Kohlenstofffaser-Halbzeug (3) ein Halbzeug ist, welches zu kohlenstofffaserverstärkten, duroplastischen Karosseriebauteilen von Fahrzeugen verarbeitbar ist.

## Claims

1. A method for producing lightweight components from carbon-fibre-reinforced thermoplastic material by injection moulding, wherein the carbon fibres are recovered from remnants (R) which are produced during the cutting to size of carbon-fibre semi-finished products (3) to produce cut parts (6, 7) which are processed into carbon-fibre-reinforced thermoset components, **characterised in that** the remnants (R) are produced in a method in which the thermoset plastics material is added to the carbon-fibre semi-finished-product cut parts (6, 7) which are to be processed into carbon-fibre-reinforced thermoset components only once they have been cut to size.

2. A method according to Claim 1, **characterised in that** the remnants (R) are reprocessed into carbon fibres of a length of less than 50 millimetres.

3. A method according to. Claim 1 or Claim 2, **characterised in that** the proportion of the carbon fibres in the lightweight component is 5 to 50% by weight.

4. A method according to one of the preceding claims, **characterised in that** the carbon-fibre-reinforced thermoplastics material lightweight components produced by injection moulding are vehicle components.

5. A method according to one of the preceding claims, **characterised in that** the thermoplastics material is a polyolefin (alternatively a polyamide/acrylic-butadiene-styrene or ABS/PC).

6. A method according to one of the preceding claims, **characterised in that** the carbon-fibre semi-finished products (3) consist of a plurality of carbon-fibre layers.

7. A method according to one of the preceding claims, **characterised in that** the carbon-fibre semi-finished products (3) are semi-finished products which can be processed into carbon-fibre-reinforced thermoset body components of vehicles.

## Revendications

1. Procédé de fabrication d'éléments légers en matériau synthétique thermoplastique renforcé par des fibres de carbone par injection selon lequel les fibres de carbone sont obtenues à partir de chutes (R) produites lors de la découpe de produits semi-finis en fibres de carbone (3) en pièces découpées (6, 7) qui sont traitées pour obtenir des éléments thermodurcissables renforcés par des fibres de carbone,
**caractérisé en ce que**
les chutes (R) sont produites par un procédé selon lequel les pièces découpées (6, 7) des produits semi-finis en fibres de carbone devant être traitées pour obtenir des éléments thermodurcissables renforcés par des fibres de carbone ne sont mises en réaction avec le matériau synthétique thermodurcissable qu'après la découpe.

2. Procédé conforme à la revendication 1,
**caractérisé en ce que**
les chutes (R) sont traitées pour obtenir des fibres de carbone ayant une longueur inférieure à 50 millimètres.

3. Procédé conforme à la revendication 1 ou 2,
**caractérisé en ce que**
la proportion de fibres de carbone dans l'élément léger est de 5 à 50 %.

4. Procédé conforme à l'une des revendications précédentes,
**caractérisé en ce que**
les éléments légers thermoplastiques renforcés par des fibres de verre obtenus par injection sont des éléments de véhicule.

5. Procédé conforme à l'une des revendications précédentes,
**caractérisé en ce que**
le matériau synthétique thermoplastique est une polyoléfine (ou un co-polymère polyamide / acryl butadiène styrène ou ABS/PC).

6. Procédé conforme à l'une des revendications précédentes,
**caractérisé en ce que**
le produit semi-fini (3) en fibres de carbone est constitué par plusieurs couches de fibres de carbone.

7. Procédé conforme à l'une des revendications précédentes,
**caractérisé en ce que**
le produit semi-fini en fibres de carbone (3) est un produit semi-fini pouvant être traité pour obtenir des éléments de carrosserie de véhicule thermodurcissables renforcés par des fibres de carbone.
